# EUROPEAN PATENT APPLICATION

(11) **EP 4 763 678 A1**
(43) Date of publication of application: **24.06.2026**
(21) Application number: 24220920.3
(22) Date of filing: 18.12.2024
(51) Int. Cl.: B62D 35/00, B62D 37/02

(54) **DEVICE FOR AFFECTING AIR FLOW AROUND CAR**

(71) Applicant: Vysoké ucení technické v Brne, 60190 Brno (CZ); Skoda Auto a.s., 29301 Mladá Boleslav (CZ)
(72) Inventor: Popela, Robert, 59253 Radkov (CZ); Vancura, Jan, Moravsky Krumlov / 67201 (CZ); Karampelas, Stavros, Kalamaria / 55132 (GR); Trusik, Vojtech, Nymburk / 28802 (CZ); Hudecek, Vojtech, Praha / 14300 (CZ)
(74) Representative: Zemanová, Veronika

(57) **Abstract**

Device for affecting airflow around a car, comprising:
- at least one air-intake device (1, 2) for taking in air from the surroundings of a forward-driving automobile, and
- a set of outlet devices (3) for expelling the air taken in by the air-intake devices (1, 2), wherein the outlet devices (3) are connected, by means of at least one channel, to the air-intake device (1, 2), and comprise a pass-through outlet aperture (31) for expelling the air from the outlet device (3), wherein each of the outlet devices (3) comprises an outlet device (3) actuator, said actuator being designed to turn an outlet opening of the outlet aperture (31) of the outlet device (3) in a range of at least 90°, preferably in a range of more than 90°.

## Description

### Field of Invention

The invention relates to a device for affecting of an air flow around a car. The device is designed to lower aerodynamic resistance and to increase stability of a car by affecting the aerodynamic adherence pressure. A suitably located air-intake device feeds the air to another location at which the air is being expelled.

### Background Art

A vast majority of existing vehicles is not equipped with any components for active regulation of air flow around the surface of the automobile. Fixed components, such as spoilers whose shape and inclination define the relation between the aerodynamic force and the vehicle's velocity, are used for enhancing the handling characteristics with regards to the aerodynamic adherence pressure. These spoilers may be actively extended and retracted into the continuous profile of the body of the automobile in accordance with the driving mode and typically are activated at higher velocities. The above-mentioned mechanical spoilers are not deigned to lower the pressure of the vehicle while driving. A specific virtual spoiler fluid system is represented by Aston Martin's Aeroblade system from 2014, see also WO 2014/167339 A1. This system is based on air intake through inlets - pockets on the rear pillars of the body - and on air expulsion in the region of the edge on the end of the body perpendicularly to the surface of the body. This system has appeared on a serially produced car of the company Aston Martin bearing the commercial name "Aeroblade".

### Summary of the Invention

Drawbacks of prior art are to a large extent eliminated by a device for affecting airflow around a car, comprising:
- at least one air-intake device for taking in air from the surroundings of a forward-driving automobile, and
- a set of outlet devices for expelling the air taken in by the air-intake devices, wherein the outlet devices are connected, by means of at least one channel, with the air-intake device, and comprise a pass-through outlet aperture for expelling the air from the outlet device, wherein each of the outlet devices comprises an outlet device actuator, said actuator being designed to turn an outlet opening of the outlet aperture of the outlet device (3) in a range of at least 90°, preferably in a range of more than 90°.

Preferably, the outlet device comprises a rotatably disposed outlet bar in which said pass-through outlet bar is arranged, wherein its longitudinal axis is parallel or identical to an axis of rotation of the outlet bar.

The outlet bar has a circular cross-section in which the pass-through outlet aperture tapers preferably from an inlet opening to a central region and widens from the central region to the outlet opening.

The air-intake device preferably comprises:
- a cap for closing an inlet opening of the air-intake device and a closing cap actuator, or
- a guiding platform for a selective guiding of the air taken in into the inlet opening or outside of the inlet opening of the air-intake device, and a guiding platform actuator, wherein said guiding platform is arranged pivotably about an axis near a front end of the guiding platform, whereas a rear end of the guiding platform is movable, by pivoting the guiding platform, from a first edge of the inlet opening of the air-intake device to a second edge of the inlet opening of the air-intake device to selectively close and open the inlet opening of the air-intake device.

Preferably, the device for affecting airflow comprises a control unit for controlling the outlet devices actuators and/or for controlling the cap or guiding platform actuator, and/or the outlet devices actuators and/or cap actuators and/or guiding platform actuators are servomotors.

The drawbacks of prior art are eliminated to a great extent also by a car, which comprises the above device, wherein the air-intake device for taking in air from the surroundings of the car is arranged in a roof region of the body of the car and/or in lateral regions of the body of the car, and wherein the set of outlet devices is arranged in a rear region of the body of the car, namely at least two, preferably at least three outlet devices in parallel to an upper rear edge of the body of the car, and/or at least one outlet device along each lateral edge of a rear window of the body of the car or a lateral rear edge of the body of the car.

Preferably, the body of the car comprises a carrier of the device for affecting airflow, wherein said carrier comprises a first wall, wherein the upper rear edge of the body of the automobile is a part of said first wall, and a second wall, a rear edge of which is arranged spaced apart and under a rear edge of the first wall, wherein a channel or channels connecting the air-intake device with the outlet device open into a space between the first wall and the second wall.

Walls of the rotatably disposed outlet bar in any of its position adjoin to an inner side of the first wall as well as an inner side of the second wall.

The outlet device actuators are preferably mutually independently controllable by means of the control unit of the device for affecting the airflow.

### Brief Description of Drawings

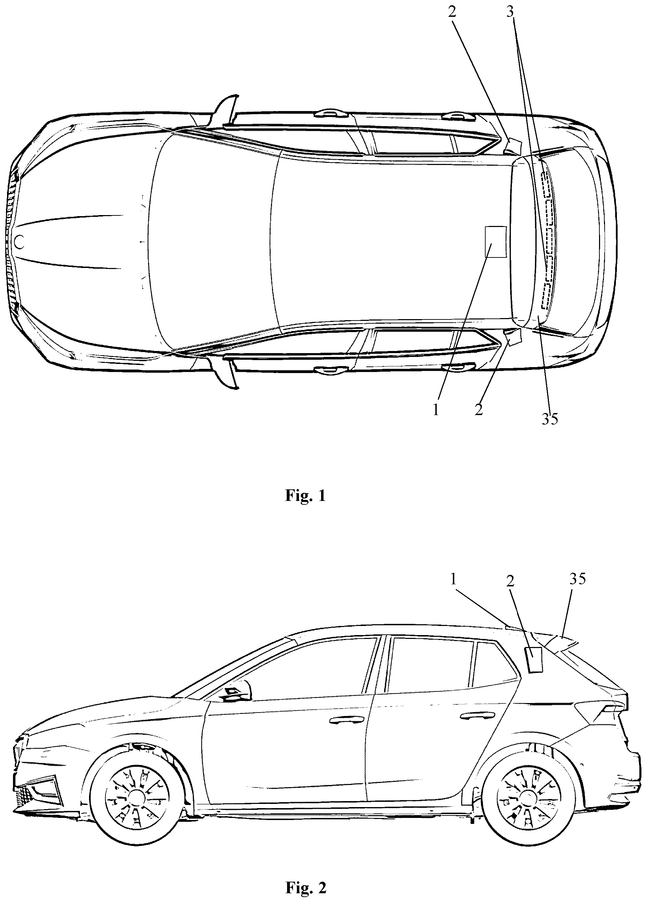

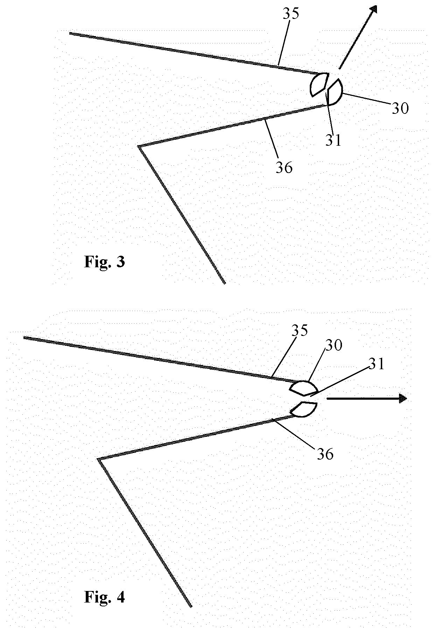

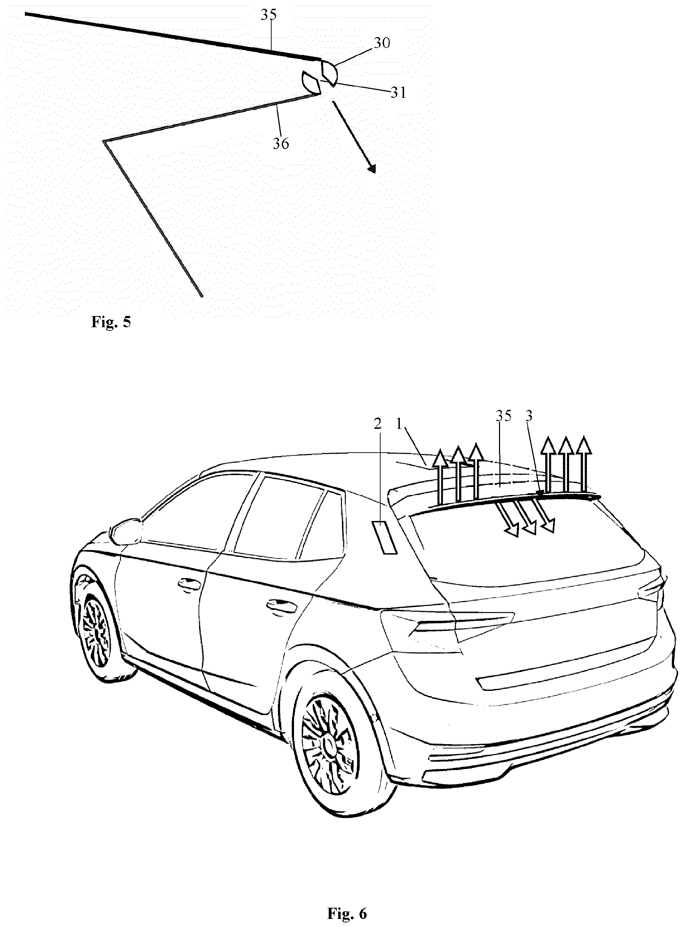

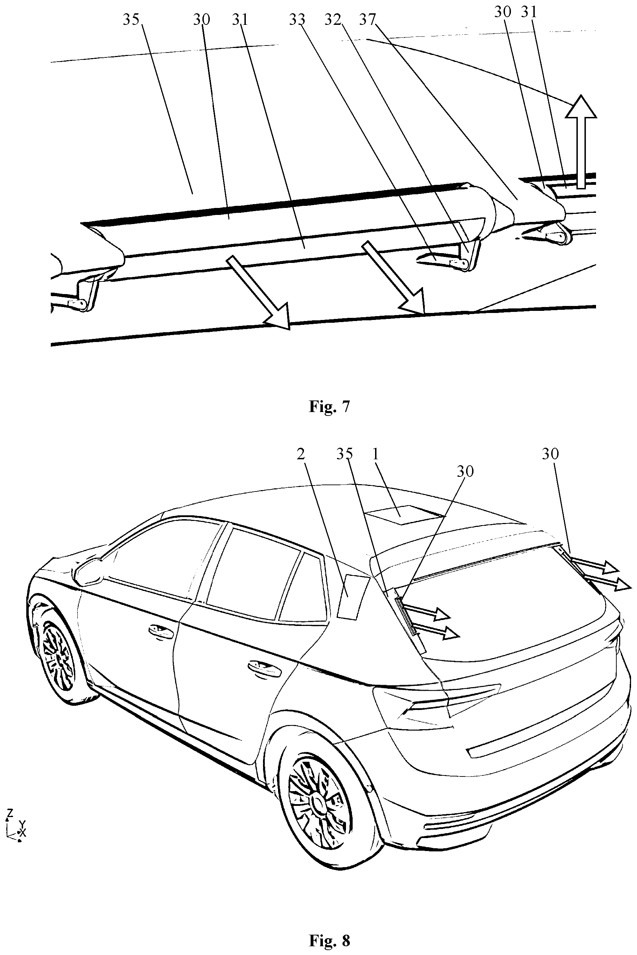

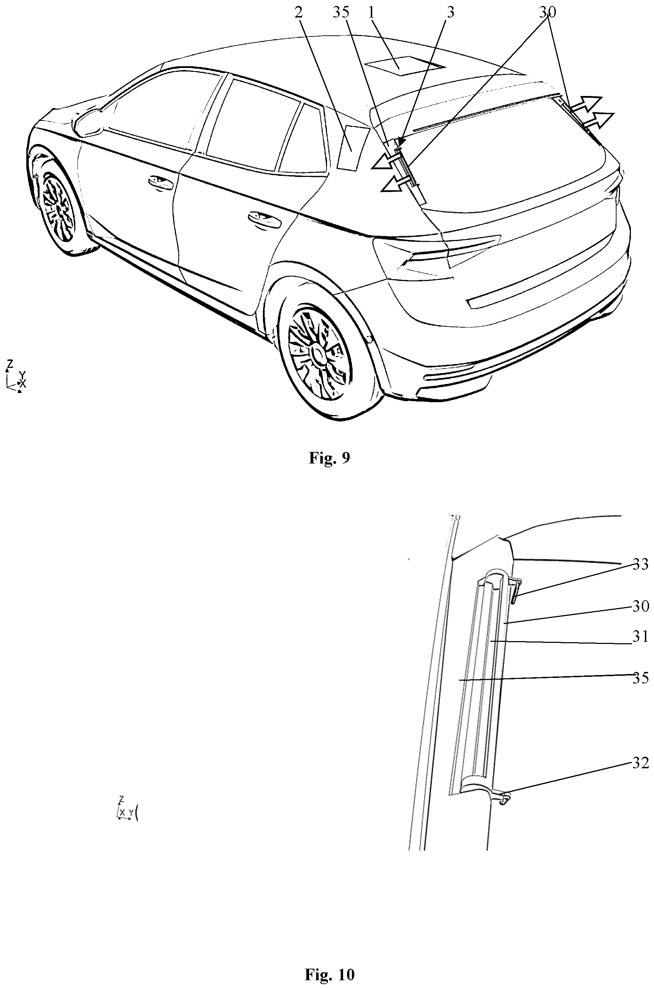

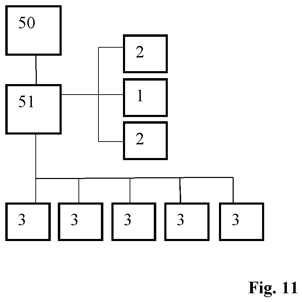

The invention is described in more detail based on exemplifying embodiments schematically illustrated in the attached Figures, wherein Fig. 1A is a top view of an embodiment of the automobile according to the invention, Fig. 2 is a side view of the embodiment of Fig. 1, Fig. 3 is a schematic drawing of a cross-section of a carrier with an outlet bar in a position for expelling air upwards, Fig. 3 shows the same drawing with the outlet bar being in a position for expelling air horizontally, Fig. 5 shows the same drawing with the outlet bar being in a position for expelling air downwards, Fig. 6 shows a side-rear view of the automobile with an indicated potential direction of air, Fig. 7 is a detail of arrangement of outlet bars of the device according to the invention, Fig. 8 shows another embodiment of the automobile according to the invention with an indicated backwards direction of air, Fig. 9 shows the same embodiment, but with an indicated out and side wards direction of air, Fig. 10 is a detail of the device for affecting an air flow of a car of Figs. 8 and 9 and Fig. 11 is a cabeling diagram of the device for affecting an air flow.

### Description of Exemplifying Embodiments

An embodiment of a car comprising a device for affecting an air flow around the car according to the invention comprises a roof device 1 for air intake arranged in a roof region of the car's body, a side device 2 for air intake arranged on rear side pillars (C-pillars) of the car's body, and a set of outlet devices 3 for releasing the air that has been taken in, said outlet devices 3 being arranged in the region of the upper rear edge of the spoiler, or eventually the upper rear edge of the roof of the car's body.

In this embodiment, the air-intake devices 1, 2 are designed so that they form forward-opened pockets which project outwards from the surrounding surface of the car's body.

In the depicted embodiment, these air-intake devices 1, 2 are thus firmly arranged projecting from the surface of the body. However, these air-intake devices 1, 2 may be also designed so that they are sunken and/or may be closed for stopping impurities from entering the devices when the car is stationed for a longer time or e.g. while driving through a dusty or otherwise polluted environment. The embodiment with sunken air intake devices 1, 2 is schematically illustrated on Figs. 8 to 10.

In a particularly preferred embodiment, the size of the inlet opening of the air intake devices 1, 2 is controllable in accordance with driving conditions for controlling the amount of the air taken in.

In such a case, at least one inlet opening of the air intake device 1, 2 is equipped with a closing cap which may be tilted toward the inlet opening to close it or tilted away from the inlet opening to open it by means of an actuator, wherein the degree of tilting is adjustable and fixable. It is also possible to arrange the closing cap slidably so that it may be slid from a closed position in which it covers the inlet opening to a more or less opened position.

The regulation of the closing cap may be carried out by means of an actuator for the closing cap, without feedback, solely based on the velocity of the car, or based on a feedback based on measurements of adherence force parameters or engine performance and driving speed, or also other control parameters. To this end, the embodiment of the device for affecting an air flow comprises a control unit 51 connected to the closing cap actuator. The closing cap actuator may be in the form of a suitable driving mechanism, its output side engaging the closing cap.

According to further alternative embodiments, the car may be provided only with side air intake devices 2 or only with roof air intake devices 1 and/or it may be possible to arrange the side air intake device 2 in the region below or above the rear pillar of the car's body.

The inlet openings of the air intake devices 1, 2 are fluidly connected by means of non-depicted channels to the output devices 3 for releasing the air taken in.

In the embodiment depicted in Figs. 1, 2, 6, 7, the output devices 3 are arranged next to each other along the rear edge of the spoiler, eventually the rear edge of the roof, namely under this rear edge, essentially along the horizontal arched line.

In this region, the body of the car forms a backwards projecting carrier for the device for directing the airflow and intended for affecting the airflow along the rear region of the body. This carrier comprises an upper platform which forms a first wall 35, and a lower platform spaced apart form said upper platform, wherein the lower platform forms a second wall 36, and a set of output devices 3 arranged between the walls along a common arched horizontal line.

Each output device 3 comprises an outlet bar 30 having a cylindrical cross-section, said outlet bar 30 being rotatably arranged along its longitudinal axis. The outlet bar 30 comprises a pass-through aperture 31, a longitudinal axis of which extends in parallel to the longitudinal axis of the outlet bar 30.

Because the walls of the rotatably disposed outlet bar 30 of each output device 3, in any position, adjoin the interior side of the first wall 35 of the carrier as well as the interior side of the second wall 36 of the carrier, the air exits the space between the first and the second wall 35, 36 almost exclusively through the outlet apertures 31.

At each of its ends, the outlet bar 30 is provided with a (non-depicted) carrying pin as well as with a manipulation element 32. The non-depicted carrying pins form an axis of rotation of the outlet bar 30 and each of them is arranged in an opening of a carrying element 37, wherein said carrying element 37 projects from the carrier and is connected to the first wall 35 and the second wall 36. A linkage 33 is attached to the manipulation element 32, said linkage 33 being connected to the output device 3 actuator designed for regulating the rotation of the outlet bar 30, thereby controlling the direction of the outlet opening of the pass-through aperture 31.

The output device 3 actuator is in the form of a driving mechanism, in this embodiment a servomotor, intended to drive movement of the linkage 33 and it is connected to a control unit 51 of the device for affecting the airflow to control the movement of this driving mechanism.

The regulation of the output device 3 actuators may be carried out by the control unit 51 of the device for affecting the airflow, namely without feedback, merely based on the velocity of the car, or based on a combination of predefined parameters, or with a feedback based on measurements of adherence force parameters or parameters of engine power and driving speed, or even further control parameters.

The control unit 51 of the device for affecting the airflow is connected to the control unit 50 of the car to receive current data pertaining to a drive, and to sensors which pick up the pressure at the rear region of the body, and possibly to sensors for evaluating of air flow rate through the device etc.

In another alternative embodiment, the control unit 51 of the device for affecting air flow may be part of the control unit 50 of the car.

In this embodiment, each output device 3 actuator is controlled independently so that turning angle of each outlet bar 30 may be set separately and independently of the turning angles of the other outlet bars 30. In an alternative embodiment, the actuators are operated symmetrically along a vertical longitudinal plane of division of the body, e.g. both outer actuators are operated so that their respective outlet bars 30 are always turned identically whereas the middle outlet bar may be turned differently, as illustrated in Fig. 6.

In another non-depicted embodiment, the end regions of each outlet bar 30 are provided with a shaped component, e.g. a toothing, for engaging with a shaped component at the output of a respective motor, eventually a driving mechanism, wherein the control unit 51 is connected to a respective motor/driving mechanism, and may be connected to the control unit 50 of the car and/or to sensors as described above.

In its cross section, the aperture 31 has a shape which is narrowest in the central region of the outlet bar 30 and gets wider towards the interior of the car's body, i.e. gets wider towards the inlet region of the outlet aperture 31 as well as outwards, i.e. towards the outlet region of the outlet aperture 31. At the same time, the outlet opening of the outlet aperture 31 is smaller than its inlet opening. In other words, the aperture 31 forms a nozzle comprising an inlet confuser portion and an outlet diffuser portion with a rounded region between them.

When the car drives forward, the air - as a result of thrust - enters the inlets of the air intake devices 1, 2 and subsequently through distribution channels into the carrier region, or rather it enters the outlet devices, in the depicted embodiment the inlets of the outlet apertures 31 of the outlet bars 30. The individual outlet bars 30 are turned in accordance to selected angles and direct the air exiting said outlet bars 30. This affects the airflow in the given location on the car's body with a potential result of increasing the adherence pressure on the back-axle of the car and a decrease in the car's resistance. The amount of the air taken in is controlled by changing the size of the inlet openings of the air-intake devices 1, 2, using feedback from the control unit 50 of the car (measurement of the current effect of air expulsion on the pressures etc.) or from sensors or without feedback.

The function of the system is controlled and the direction of the airflow may differ in accordance with driving mode. For instance, the system is closed in a stationary mode, which prevents pollution when the car is stationed for a longer period of time. At velocities of up to 50 kph, the airflow is directed downwards along the rear wall of the car which does not affect the handling performance but limits the pollution of the rear window. Furthermore, e.g. at velocities in the range of 50 to 80 kph, the airflow is directed essentially horizontally, eventually in parallel to the plane of the roof region of the car's body or to the plane of the first wall 35 of the carrier which leads to a decrease in the resistance of the car. At velocities exceeding 80 kph, the airflow from all of the outlet bars 30 is directed upwards up to a vertical direction, or in a combination, e.g. perpendicularly upwards in the intermediate region to increase the adherence pressure and in parallel to the surface in the outer regions to increase the stability of the car.

In the embodiment depicted in Figs. 8 to 10, the air-intake devices 1, 2 are sunken, i.e. comprise a guiding surface in the outer surface of the car's body, wherein said guiding surface sinks inside from the front part of to the rear part of the car and opens into the inlet opening of the air-intake device 1, 2.

In a non-depicted embodiment, this guiding surface may be arranged pivotably about an axis arranged on the side of the guiding surface opposite of the inlet opening. In other words, the guiding surface comprises a pivot axis on its front side and the inlet opening adjoins to its rear side. The guiding surface may be thus pivoted from a closed position in which its outer surface lies in the plane of the outer surface of the surrounding region of the car's body, into an open position in which its outer surface, near the inlet opening, is turned inwards with regards to the plane of the outer surface of the surrounding region of the car's body, thereby uncovering the inlet opening. In such a case, it is preferably also possible to control the degree of turning of the guiding surface, thereby also controlling the degree of opening of the inlet opening, e.g. by means of a suitable actuator which is connected to the control unit 51 of the device for affecting airflow.

Furthermore, the outlet devices according to the embodiment illustrated in Figs. 8 to 10 are arranged on rear side pillar (C-pillars) of the car's body, essentially along both lateral edges of the rear window. Each of these outlet devices comprises again an outlet bar 30 rotatably disposed in a carrier and comprising a pass-through outlet aperture 31, the longitudinal axis of which is parallel or identical to the axis of rotation of the outlet bar 30. The outlet bar 30 is provided with a manipulation element 32 to which a linkage 33 is attached, wherein said linkage 33 is designed to control the turning of the outlet bar 30. These outlet devices 3 are arranged so that the longitudinal axis of any of the outlet bars 3 is arranged essentially in parallel to a rear lateral edge of the car's body. By turning the outlet bar 30, the flow of the expelled air may be directed rearwards in a direction parallel to the driving direction, as illustrated in Fig. 8, or to the side, as illustrated in Fig. 9. Outlet device 3 arranged in such a way may be used particularly while changing the driving direction (or during a strong side wind) based on driving speed data, steering wheel angle data and data concerning the course of this angle. The expulsion thus may be asymmetrical, i.e. solely on one side. The purpose of this is to prevent the adherence of the airflow to the rounded rear part of the car and the formation of a directionally destabilizing moment. A typical example is changing the lane at a high speed.

In the embodiment of Fig. 1, five outlet devices along the rear upper edge of the automobile are used, whereas one outlet device 3 on each lateral side of the rear window is used in the embodiment of Fig. 8 and 9. However, any number of outlet devices 3 may be used along the rear upper edge of the automobile and/or along the lateral sides of the rear window and then these outlet devices 3 may be used with any desired combination of expulsion directions in accordance with automobile types and driving styles. At the same time, within the control unit 51 of the device for affecting airflow or within the control unit 50 of the automobile, status data from the control unit 50 of the car may be recorded and stored in a memory during the drive, particularly data pertaining to the velocity, the angle of the steering wheel, the total weight of the automobile including load, eventually load on the back-axle etc., status data from the control unit 51 of the device for affecting the airflow, particularly the degree of opening of the inlet openings of the air-intake devices 1, 2 and the angle of turning of the individual outlet devices 36, potentially also data from eventual sensors, wherein the aggregate of these data may be used for machine learning based on which it is possible to define optimal states of actuators of the air-intake devices 1, 2 and an optimal angle of the individual outlet devices 3 for specific types of driving conditions for a given type of automobile or a given specific automobile.

## Claims

1. Device for affecting airflow around a car, comprising:
- at least one air-intake device (1, 2) for taking in air from the surroundings of a forward-driving automobile, and
- a set of outlet devices (3) for expelling the air taken in by the air-intake devices (1, 2), wherein the outlet devices (3) are connected, by means of at least one channel, with the air-intake device (1, 2), and comprise a pass-through outlet aperture (31) for expelling the air from the outlet device (3), wherein each of the outlet devices (3) comprises an outlet device (3) actuator, said actuator being designed to turn an outlet opening of the outlet aperture (31) of the outlet device (3) in a range of at least 90°, preferably in a range of more than 90°.

2. Device for affecting airflow according to claim 1, **characterized in that** the outlet device (3) comprises:
- a rotatably disposed outlet bar (30) in which said pass-through outlet bar (31) is arranged, wherein its longitudinal axis is parallel or identical to an axis of rotation of the outlet bar (30).

3. Device for affecting airflow according to claim 2, **characterized in that** the outlet bar (30) has a circular cross-section in which the pass-through outlet aperture (31) tapers preferably from an inlet opening to a central region and widens from the central region to the outlet opening.

4. Device for affecting airflow according to anyone of the preceding claims, **characterized in that** the air-intake device (1, 2) comprises:
- a cap for closing an inlet opening of the air-intake device (1, 2) and a closing cap actuator, or
- a guiding platform for a selective guiding of the air taken in into the inlet opening or outside of the inlet opening of the air-intake device (1, 2), and a guiding platform actuator, wherein said guiding platform is arranged pivotably about an axis near a front end of the guiding platform, whereas a rear end of the guiding platform is movable, by pivoting the guiding platform, from a first edge of the inlet opening of the air-intake device (1, 2) to a second edge of the inlet opening of the air-intake device (1, 2) to selectively close and open the inlet opening of the air-intake device (1, 2).

5. Device for affecting airflow according to anyone of the preceding claims, **characterized in that** it comprises a control unit (51) for controlling the outlet devices (3) actuators and/or for controlling the cap or guiding platform actuator, and/or
the outlet devices (3) actuators and/or cap actuators and/or guiding platform actuators are servomotors.

6. Car, **characterized in that** it comprises the device according to anyone of claims 1 to 5,
wherein the air-intake device (1, 2) for taking in air from the surroundings of the car is arranged in a roof region of the body of the car and/or in lateral regions of the body of the car,
and wherein the set of outlet devices (3) is arranged in a rear region of the body of the car, namely at least two, preferably three outlet devices (3) in parallel to an upper rear edge of the body of the car, and/or at least one outlet device (3) along each lateral edge of a rear window of the body of the car or a lateral rear edge of the body of the car.

7. Car according to claim 6, **characterized in that** the body of the car comprises a carrier of the device for affecting airflow, wherein said carrier comprises a first wall (35), wherein the upper rear edge of the body of the automobile is a part of said first wall (35), and a second wall (36), a rear edge of which is arranged spaced apart and under a rear edge of the first wall (35), wherein a channel or channels connecting the air-intake device (1, 2) with the outlet device (3) open into a space between the first wall (35) and the second wall (36).

8. Car according to claim 7, **characterized in that** walls of the rotatably disposed outlet bar (30) in any position adjoin to an inner side of the first wall as well as an inner side of the second wall (36).

9. Car according to anyone of claims 6 to 8, **characterized in that** the outlet devices (3) actuators are mutually independently controllable by means of the control unit (51) of the device for affecting the airflow.
